# EUROPÄISCHE PATENTSCHRIFT

(11) **EP 1 242 306 B1**
(45) Veröffentlichungstag und Bekanntmachung des Hinweises auf die Patenterteilung: **23.04.2003**
(21) Anmeldenummer: 00979672.3
(22) Anmeldetag: 07.12.2000
(51) Int. Cl.: C01B 17/90, C01B 17/69

(54) **VERFAHREN ZUR HERSTELLUNG HOCHREINER SCHWEFELSÄURE**
METHOD FOR PRODUCING HIGH-PURITY SULPHURIC ACID
PROCEDE POUR LA PRODUCTION D'ACIDE SULFURIQUE DE GRANDE PURETE

(30) Priorität: 28.12.1999 DE 19963509
(43) Veröffentlichungstag der Anmeldung: 25.09.2002
(73) Patentinhaber: MERCK PATENT GmbH, 64293 Darmstadt (DE)
(72) Erfinder: HOSTALEK, Martin, 64291 Darmstadt (DE); BÜTTNER, Werner, 64291 Darmstadt-Arheilgen (DE); HAFNER, Rolf, 63329 Egelsbach (DE); LU, Chih-Peng, Lin-kou Village Taipei County (TW); KAN, Ching-Jung, Shuli Nan-Tou (TW); SEITZ, Ekkehart, 64342 Seeheim-Jugenheim (DE); FRIEDEL, Ernst, 64289 Darmstadt (DE)
(86) Internationale Anmeldenummer: EP0012327
(87) Internationale Veröffentlichungsnummer: WO01047804

(56) Entgegenhaltungen:
- EP-A- 0 150 282
- US-A- 3 760 061
- US-A- 5 711 928
- DATABASE CHEMABS [Online] CHEMICAL ABSTRACTS SERVICE, COLUMBUS, OHIO, US; GASPIERIK, IVAN ET AL: "Manufacture of sulfuric acid useful in microelectronics" retrieved from STN Database accession no. 111:80844 CA XP002163475 & CS 259 353 B (CZECH.) 14. Oktober 1988 (1988-10-14)

## Beschreibung

Die vorliegende Erfindung betrifft ein neues Verfahren zur Herstellung von hochreiner Schwefelsäure für die Verwendung in der Halbleiterindustrie.

Eine reine Schwefelsäure kann in technischem Maßstab sowohl durch Einleiten von SO₃ in verdünnte Schwefelsäure, durch Zusammenführen von SO₃ und reinem Wasser oder durch Destillation von Schwefelsäure bei Normaldruck oder vermindertem Druck hergestellt werden.

Die Qualität der hergestellten Schwefelsäure wird hierbei nicht nur durch die Auslegung der Anlagen und der Qualität der eingesetzten Rohstoffe sondern auch durch die Art und Qualität der zur Konstruktion der Anlage verwendeten Werkstoffe beeinflußt. Diese beeinflussen erheblich den Gehalt an unerwünschten Metallionen aber auch an Partikeln.

Es ist bekannt, zur Herstellung von hochreinerer konzentrierter Schwefelsäure SO₃ aus Oleum in einer Destillationsblase zu verdampfen oder auszutreiben und anschließend in verdünnte reine Schwefelsäure einzuleiten. In besonderen Ausführungsformen erfolgt gelegentlich die Verdampfung in einem Fallfilmverdampfer. In der Regel sind die zur Herstellung reiner Schwefelsäure verwendeten Anlagen aus Glas oder aus mit Emaille ausgekleidetem Stahl hergestellt. Je nach verwendeter Qualität können diese Materialien durch Auslaugen ionogene und/oder partikelförmige Verunreinigungen abgeben.

Nachteilig ist bei den bekannten Verfahren, daß bei ungleichmäßiger Verdampfung Flüssigkeitströpfchen in Form eines feinen Nebels mit dem Gasstrom mitgeführt und so darin gegebenenfalls enthaltene Verunreinigungen in das Endprodukt getragen werden können. Insbesondere geschieht dieses bei einer Verdampfung an üblicherweise im technischen Maßstab eingesetzten Fallfilmverdampfem aber auch bei Verwendung von Destillationsblasen.

Nachteilig ist aber auch der in der Schwefelsäure nach der Aufreinigung noch enthaltene SO₂-Gehalt.

Aufgabe der vorliegenden Erfindung ist es daher, ein verbessertes, preiswertes Verfahren zur Herstellung hochreiner Schwefelsäure für die Halbleiterindustrie zur Verfügung zu stellen, wodurch hochreine, möglichst metallionen- und SO₂-freie aber vor allem auch möglichst partikelfreie Schwefelsäure in technischem Maßstab hergestellt werden kann.

Die Lösung der erfindungsgemäßen Aufgabe erfolgt durch ein kontinuierlich durchführbares Verfahren zur Herstellung hochreiner Schwefelsäure für die Halbleiterindustrie, welches dadurch gekennzeichnet ist, daß
a) zu 24- 70 %igem technischem Oleum eine ausreichende Menge Wasserstoffperoxidlösung mit einer Konzentration von 1 - 70 % zur Absenkung der SO₂-Konzentration auf unter 10 ppm zugemischt wird und
b) das im Oleum enthaltene SO₃ in einem Fallfilmverdampfer bei 90- 130 °C verdampft wird,
c) die Abtrennung von Schwefelsäure- und Nitrosylschwefelsäurespuren aus dem SO₃-Gasstrom, welcher aus dem Verdampfer entweicht, mittels eines Nebelabscheiders,z. B. in Form eines Kerzenfilters erfolgt,
d) das hochreine SO₃ mit Inertgas angereichert wird, und
e) die Absorption des SO₃ in Schwefelsäure einer Konzentration von 90 - 99 % unter Kühlung erfolgt.

Durch Zugabe von hochreinem deionisiertem Wasser kann die Konzentration der hochreinen Schwefelsäure auf eine gewünschte Konzentration eingestellt werden, wobei die Konzentrationseinstellung durch Leitfähigkeitsmessung geregelt wird.

Eine besondere Ausführungsform des erfindungsgemäßen Verfahrens besteht darin, daß ein Teilstrom der erhaltenen hochreinen Schwefelsäure in den Absorptionsraum zurückgeführt wird.

Die nach dem erfindungsgemäßen Verfahren erhaltene hochreine Schwefelsäure wird in mit PTFE ausgekleideten Lagerbehältern gesammelt.

Gebildete oder eingeschleppte partikuläre Verunreinigungen werden aus der Schwefelsäure durch eine ein- bis dreistufige Filtration entfernt.

Vorzugsweise werden zur Durchführung des erfindungsgemäßen Verfahrens Filter bestehend aus PFA oder PTFE einer Porengröße von 0,1 µm bis 1 µm verwendet.

Die SO₃-Absorption erfolgt vorteilhafterweise im Gleichstrom in einem mit PTFE ausgekleideten Reaktor, welcher aus PFA bestehende Füllkörper enthält.
Die im erfindungsgemäßen Verfahren gebildete Reaktionswärme wird in einem nachgeschalteten Rohrbündelreaktor, bestehend aus PFA oder aus fluorierten Polyolefinen, unter Inertgaspolster abgeführt.

Durch das erfindungsgemäße Verfahren erfolgt eine Anreicherung des hochreinen SO₃-Stromes mit reinst Stickstoff oder hochgereinigter Luft als Inertgas auf eine Inertgas-Konzentrationen zwischen 1 bis 50 %.

Zur Durchführung des Verfahrens werden Demister, bestehend aus hochreinem PFA oder aus fluoriertem Polyolefinen, verwendet.

Die Entlüftungsgase werden in einem Abluftwäscher, einem sogenannten Scrubber, mit reiner Schwefelsäure behandelt.

Durch Versuche wurde gefunden, daß im technischen Maßstab preiswert hochreine Schwefelsäure hergestellt werden kann, welche die oben genannten Kriterien erfüllt, wenn eine stufenweise Behandlung und Aufreinigung der konzentrierten technischen Ausgangsqualität erfolgt, wobei das Gesamtverfahren an sich kontinuierlich durchführbar ist.

Die durchgeführten Versuche haben gezeigt, daß in einem vorgelagerten Schritt der SO₂-Gehalt in konzentrierter Schwefelsäure technischer Qualität (Oleum mit einer Konzentration zwischen 24 - 70 %) durch die Zugabe von geringen Mengen Wasserstoffperoxid auf Konzentrationen von weniger als 1 ppm gesenkt werden kann. Die Bestimmung der SO₂-Konzentration im Oleum erfolgt nach üblichen, dem Stand der analytischen Technik entsprechenden Titrationsmethoden. Eine solche Methode ist beispielsweise imJIS K8951⁻¹⁹⁹⁵beschrieben.

Zu diesem Zweck ist es zweckmäßig, Wasserstoffperoxidlösungen mit einer Konzentration zwischen 1 bis 70 % zu verwenden. Im allgemeinen ist ausreichend, wenn zur Oxidation von enthaltenem SO₂ Wasserstoffperoxidlösung in einer Menge von 0,001 bis 0,1 % bezogen auf die zu behandelnde Menge konzentrierter Schwefelsäure bzw. Oleum zudosiert wird.

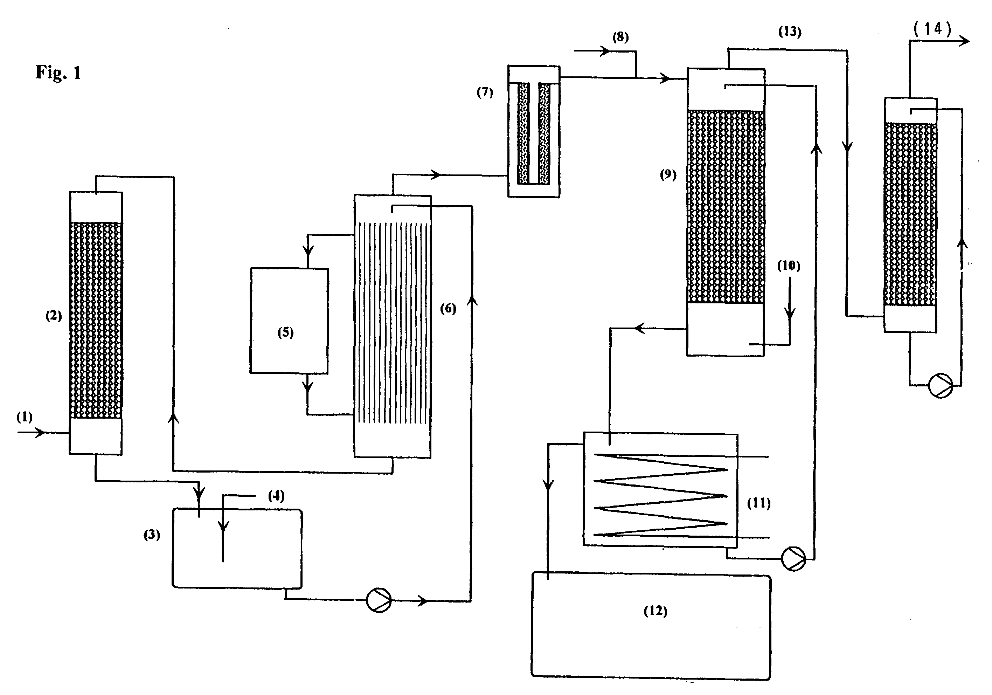

An sich ist die Zugabe der Wasserstoffperoxidlösung zum technischen Oleum unkritisch. Sie kann über ein im Oleum-Puffertank Fig. 1 (3), welcher dem Oleumturm Fig. 1 (2) nachgeschaltet ist, installiertes Tauchrohr am Boden des Tanks erfolgen. Die Durchmischung erfolgt selbstständig infolge der durch die frei werdende Wärme im Tank erzeugten Konvektion. Es ist auch möglich, an anderer Stelle des Tanks die Wasserstoffperoxidlösung hinzu zu fügen. Letzteres würde aber zusätzliche Einbauten, und eventuell ein mechanisches Mischen, wie z. B. Rühren erforderlich machen.

Wird nun aus dem SO₂-freien Oleum SO₃ in einem Fallfilmverdampfer Fig. 1 (6) mit exakt regulierbarer Heizung Fig. 1 (5) unter milden Bedingungen verdampft, wird reines, schwefelsäurefreies SO₃ erhalten.

Ein für diesen Zweck geeigneter Fallfilmverdampfer zeichnet sich durch folgende Eigenschaften aus:
- eine homogene Flüssigkeitsverteilung,
- eine geringe Gasgeschwindigkeit,
- Druckbegrenzung durch Syphons, was zur Störfallvermeidung der Anlage einen Beitrag leistet,
- ein geringer Überdruck,
- niedrige Temperaturen von Oleum und Heizgas
- gleichmäßige Heizung des zu behandelnden Produkts.

Durch Verwendung eines solchen Fallfilmverdampfers wird eine extrem geringe Freisetzung von Flüssigkeitströpfchen (Nebel), die Verunreinigungen weitertragen könnten, aus dem Oleum gewährleistet.

Das bezüglich des enthaltenen SO₃- Gehalts abgereicherte Oleum wird zurückgeführt und in einem sogenannten Oleumturm Fig. 1 (2) mit SO₃ wieder auf die ursprüngliche Konzentration gebracht.

Das durch die Behandlung im Fallfilmverdampfer erhaltene SO₃ wird anschließend durch einen geeigneten Demister Fig. 1 (7) geführt, wodurch gegebenenfalls noch enthaltene Schwefelsäure- und Nitrosylschwefelsäurespuren, eventuell enthaltene feste Partikeln abgeschieden werden. An dem Filter werden zusätzlich noch kondensierbare oder absorbierbare Verunreinigungen, wie z. B. Eisen aus der Gasphase abgetrennt. Vorzugsweise wird zu diesem Zweck ein sogenannter Kerzenfilter eingesetzt. Für diesen Zweck haben sich Kerzenfilter, bestehend aus hochreinem PFA oder fluoriertem Polyolefin, welches keine kationischen Verunreinigungen enthält, als besonders geeignet herausgestellt.

Durch diese Filterbehandlung wird in dem Gasstrom der Anteil gegebenenfalls noch enthaltener flüssiger Anteile (Tröpfchen) noch reduziert. Auch werden bei niedriger Temperatur kondensierende bzw. durch die Benetzung des Filtergewebes mit Schwefelsäure absorbierbare Verunreinigungen, wie z. B. Nitrosylschwefelsäure, abgetrennt.

Es wurde gefunden, daß ein besonders SO₂-armes Endprodukt erzielt werden kann, wenn der hochreine SO₃-Strom mit einem Inertgas, wie Stickstoff oder Luft, angereichert wird. Insbesondere wurde gefunden, daß in Gegenwart dieser Gasen noch im SO₃-Gasstrom enthaltenes SO₂ in weit weniger starkem Maße in konzentrierter Schwefelsäure absorbiert wird.

Daher wird das hochreine SO₃, nachdem es den Demister passiert hat, mit 1 bis 50 % Inertgas, wie z. B. reinst Stickstoff oder hochgereinigte Luft, Fig. 1 (8) angereichert, um möglicherweise noch im SO₃ enthaltene geringe Spuren an SO₂ bis zu Gehalten unter der derzeitigen Nachweisgrenze im Endprodukt abzutrennen.

Zu dieser Anreicherung ist es unabdingbar, daß hochreines Inertgas eingesetzt wird. Geeignete Inertgase sind reinster Stickstoff oder nach speziellen Verfahren aufgereinigte Luft, in welchen Umgebungsluft zur Reinigung komprimiert, gekühlt, vorgefiltert, entfeuchtet und endfiltriert wird. Letzteres erfolgt mit geeigneten Filtern, durch die Partikel mit spezifischen Durchmesser ≤ 0,01µm abgetrennt werden.

Um eine erneute Kontamination des hochreinen SO₃-Gases zu verhindern, werden als SO₃-führende Leitungen Rohrleitungen mit innerer Auskleidung aus hochreinem PTFE oder fluoriertem Polyolefinen verwendet.

Im darauffolgenden Herstellungsschritt wird der Gasstrom in einen Absorptionsturm Fig. 1 (9), d. h. in einen mit PFA oder mit fluorierten Polyolefin ausgekleideten Reaktor geführt, der mit speziellen Füllkörpem aus PTFE oder fluoriertem Polyolefin ausgefüllt ist. In diesem Reaktor wird das Gas im Gleichstrom mit einer konzentrierten Schwefelsäure geführt, wobei das SO₃ in der verdünnten Schwefelsäure absorbiert wird. Die zu diesem Zweck eingesetzte hochreine und im Gleichstrom geführte Schwefelsäure besitzt eine Konzentration zwischen 90 und 99%.

Die im Absorptionsturm Fig. 1 (9) oder in der Absortptionskolonne gebildete Schwefelsäure wird mit hochreinem Wasser Fig.1 (10) auf die ursprüngliche Konzentration verdünnt, gekühlt Fig. 1 (11) und in den Kopf des Absorptionsturms zurückgeführt. Die Zuführung von Reinstwasser erfolgt am Boden der Absorptionskolonne vor dem nachfolgenden Wärmetauscher Fig. 1 (11) zur Abführung der bei der Wasserzugabe frei werdenden Wärme.

Die während der Absorption entstehende Reaktionswärme wird in einem sich anschließenden Wärmetauscher Fig. 1 (11) mit innerer Auskleidung aus PFA oder fluoriertem Polyolefin abgeführt. Als besonders geeignet hat sich für diesen Zweck ein Rohrbündeltankkühler erwiesen. Dieser Kühlertank wird vorzugsweise unter Inertgaspolster betrieben.

Zur Einstellung der gewünschten Konzentration wird hochreines entionisiertes Wasser zugeführt. Die Zufuhr von Wasser wird durch Leitfähigkeitsmessung im Endprodukt geregelt. Dieser letzte Schritt kann in einer besonderen Ausführungsform batchweise im gesammelten Produkt erfolgen. Vorzugsweise erfolgt eine kontinuierliche Messung der Leitfähigkeit und kontinuierliche Einstellung der Konzentration.

Zur kontinuierlichen Durchführung der Aufreinigung wird laufend ein Teilstrom der erhaltenen hochreinen Schwefelsäure wieder in den Kopf des Absorptionsturms zurückgeführt. Der andere Teilstrom wird in PTFE oder mit fluoriertem Polyolefin ausgekleidete Lagertanks Fig. 1 (12) geführt. Nach einer Qualitätsbestimmung wird die Schwefelsäure zur Abtrennung eventuell enthaltener partikulärer Verunreinigungen filtriert und in geeignete Lager- oder Transportcontainer abgefüllt.

Die Abfüllung kann über eine sogenannte Clean Coupling Box in PTFE- oder mit fluoriertem Polyolefin ausgekleidete Container, dem Fachmann als sogenannte ISO-Container bekannt, erfolgen.

Das während der Durchführung des Absorptionsverfahrens zurückbleibende, geringe Mengen SO₂ enthaltende Inertgas Fig. 1 (13) wird in einem Abluftwäscher Fig. 1 (13), einem dem Fachmann auch als Scrubber bekannt, mit reiner Schwefelsäure einer Konzentration von 90 - 99 % gewaschen. Das so erhaltene Produkt wird für weniger kritische Anwendungen außerhalb der Halbleiterindustrie eingesetzt.

Wird durch die Analyse vor der Abfüllung der hergestellten hochreinen Schwefelsäure eine nicht tolerierbare Partikelzahl im Produkt festgestellt, kann eine Filtration nachgeschaltet werden. Als besonders geeignet hat sich eine 3-Stufenfiltration erwiesen. Hierbei wird die aufgereinigte Schwefelsäure stufenweise von Partikeln mit einem durchschnittlichen Querschnitt >1µm, >0,5µm und >0,1 µm durch Filtrieren befreit. Für diesen Zweck können Filter aus PFA oder fluoriertem Polyolefin eingesetzt werden.

Eine solche Stufenfiltration ist dem Fachmann an sich bekannt und wird eingesetzt, um Partikel, die gegebenenfalls durch Abrieb im Absorptionsturm und den nachfolgenden Anlagenteilen in das Produkt gelangt sind, abzutrennen. Üblicherweise werden zu diesem Zweck Filter unterschiedlicher Porengröße hintereinander geschaltet. Es ist aber auch möglich, Filter gleicher Porengröße hintereinander zu schalten. Dieses kann sinnvoll sein, da, wie dem Fachmann bekannt ist, bei Filtern definierter Porengröße die Rückhalterate auch für Partikel die größer als die angegebene Porengröße sind, nicht 100% beträgt.

Die durchgeführten Versuche haben gezeigt, daß durch das hiermit zur Verfügung gestellte Verfahren kontinuierlich eine konstante Qualität einer hochreinen Schwefelsäure gewährleistet werden kann. Vorteilhaft ist auch die Möglichkeit, bei Bedarf die beschriebene 3-stufige Filtration mit abnehmender Porengröße nachzuschalten, um die Partikelzahl in gewünschter Weise zu reduzieren.

Durch die nachgeschaltete Analyse zur Endkontrolle kann für den Endverbraucher eine Reinheit im ppt-Bereich gewährleistet werden.

Dieses ist von besonderer Bedeutung, da an die für die Herstellung von Mirochips verwendeten Chemikalien besonders hohe Reinheitsanforderungen gestellt werden. Dieses bezieht sich insbesondere auf die Konzentration kationischer, anionischer und partikulärer Verunreinigungen. Entsprechend den derzeitigen Anforderungen werden für den genannten Anwendungszweck von den Anwendern Höchstgrenzen an kationischen Verunreinigungen im Bereich 1 - 100 ppt, an anionischen Verunreinigungen im Bereich von 10 ppt - 50 ppb und im partikulären Bereich Partikelgehalte von <10 -<1000 Partikel gesetzt. Je nach Chemikalie gelten unterschiedliche Werte.

Inbesondere wird dieses dadurch erreicht, daß die Anlage so ausgelegt ist, daß alle mit der aufzureinigenden und der gereinigten Schwefelsäure in Kontakt kommenden Anlagenteile aus gegenüber konzentrierter Schwefelsäure inerten Werkstoffen hergestellt oder mit solchen Werkstoffen ausgekleidet sind.

Das erfindungsgemäße Verfahren ist besonders vorteilhaft einsetzbar in Kombination mit einer Anlage zur Synthese von SO₃.

In Fig. 1. ist der Aufbau einer erfindungsgemäßen Anlage schematisch in Form eines Fließschemas gezeigt, die darin gezeigten Komponenten haben folgende Bedeutungen:
(1) SO₃-Einspeisung
(2) Oleumturm
(3) Oleumpuffertank
(4) Wasserstoffperoxid-Einspeisung
(5) Heizsystem
(6) Verdampfer
(7) Demister
(8) Inertgaszufuhr
(9) Absorptionsturm
(10) Reinstwasserzufuhr
(11) Kühlung
(12) Endprodukt
(13) Abgas
(14) gereinigtes Abgas

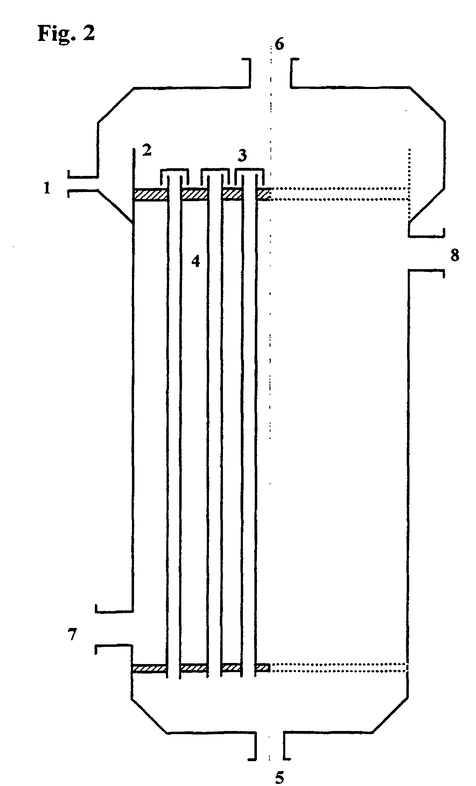

Fig. 2 zeigt den schematischen Aufbau eines im Verfahren einsetzbaren Oleumverdampfers. Den einzelnen Komponenten kommen folgende Bedeutungen zu:
(1) Oleumeintritt
(2) erstes Überlaufwehr
(3) Rohrverteilerkappen
(4) Verdampferrohr
(5) Oleumauslauf
(6) SO₃-Abzug
(7) Heizlufteintritt
(8) Heizluftaustritt

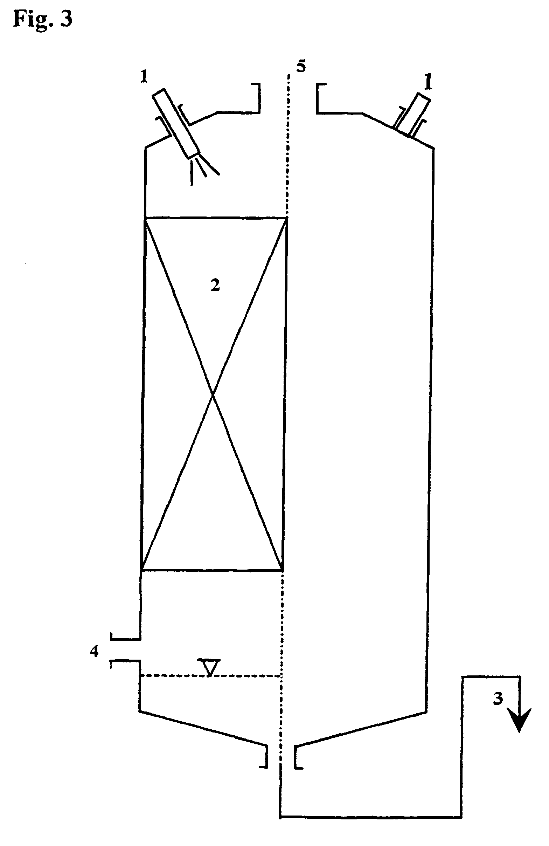

Fig. 3 wiederum zeigt den schematischen Aufbau eines im Verfahren einsetzbaren Absorbers bzw. Absorptionsturms. Die hierin gezeigten Komponenten haben die nachfolgend gegebenen Bedeutungen:
(1) Säureverteilerdüsen
(2) Füllkörperschicht
(3) Säureaustritt zum Kühler
(4) Inertaustritt
(5) SO₃-Austritt

In den Schutzbereich der vorliegenden Erfindung fallen nicht nur die beschriebenen und schematisch dargestellten Anlagen. Es sind darunter auch dem Fachmann geläufige Verallgemeinerungen oder Abänderungen, bzw. äquivalent wirkende Komponenten zu verstehen, die den beschriebenen Zweck erfüllen.

## Patentansprüche

1. Verfahren zur Herstellung hochreiner Schwefelsäure für die Halbleiterindustrie, **dadurch gekennzeichnet, daß**
a) zu 24 - 70 %igem technischem Oleum eine ausreichende Menge Wasserstoffperoxidlösung mit einer Konzentration von 1 - 70 % zur Absenkung der SO₂-Konzentration auf unter 10 ppm zugemischt wird und
b) das im Oleum enthaltene SO₃ in einem Fallfilmverdampfer bei 90 - 130 °C verdampft wird,
c) die Abtrennung von Schwefelsäure- und Nitrosylschwefelsäurespuren aus dem SO₃-Gasstrom, welcher aus dem Verdampfer entweicht, mittels eines Nebelabscheiders,z. B. in Form eines Kerzenfilters er folgt,
d) das hochreine SO₃ mit Inertgas angereichert wird, und
e) die Absorption des SO₃ in Schwefelsäure einer Konzentration von 90 - 99 % unter Kühlung erfolgt.

2. Verfahren gemäß Anspruch 1, **dadurch gekennzeichnet, daß** ein Teiistrom der erhaltenen hochreinen Schwefelsäure in die Absorptionskolonne zurückgeführt wird.

3. Verfahren gemäß Anspruch 1, **dadurch gekennzeichnet, daß** durch Zugabe von hochreinem deionisiertem Wasser die Konzentration der hochreinen Schwefelsäure auf eine gewünschte Konzentration eingestellt wird, wobei die Konzentrationseinstellung durch Leitfähigkeitsmessung geregelt wird.

4. Verfahren gemäß Anspruch 1, **dadurch gekennzeichnet, daß** die erhaltene hochreine Schwefelsäure in mit PTFE ausgekleidetem Lagerbehälter bzw. Container gefüllt wird.

5. Verfahren gemäß der Ansprüche 1 bis 4, **dadurch gekennzeichnet, daß** gebildete Partikel aus der Schwefelsäure durch eine drei-Stufenfiltration entfernt werden.

6. Verfahren gemäß Anspruch 5, **dadurch gekennzeichnet, daß** Filter bestehend aus PFA oder PTFE einer Porengröße von 0,1 µm bis 1 µm verwendet werden.

7. Verfahren gemäß Anspruch 1, **dadurch gekennzeichnet, daß** die SO₃-Absorption in einem mit PTFE ausgekleidetem Reaktor welcher Füllkörper, bestehend aus PFA, enthält, im Gleichstrom erfolgt.

8. Verfahren gemäß der Ansprüche 1 und 2, **dadurch gekennzeichnet, daß** die gebildete Reaktionswärme in einem nachgeschalteten Rohrbündelreaktor aus PFA oder aus fluorierten Polyolefinen, unter Inertgaspolster abgeführt wird.

9. Verfahren gemäß Anspruch 1, **dadurch gekennzeichnet, daß** die Anreicherung des hochreinen SO₃ mit reinst Stickstoff oder hochgereinigter Luft als Inertgas auf eine Inertgas-Konzentrationen zwischen 1 bis 50 % erfolgt.

10. Verfahren gemäß Anspruch 1, **dadurch gekennzeichnet, daß** ein Demister, bestehend aus hochreinem PFA oder aus fluorierten Polyolefinen, verwendet wird.

11. Verfahren gemäß Anspruch 1, **dadurch gekennzeichnet, daß** Entlüftungsgase in einem Abluftwäscher, einem sogenannten Scrubber, mit reiner Schwefelsäure behandelt werden.

## Claims

1. Process for producing high purity sulfuric acid for the semiconductor industry, **characterized in that**
a) hydrogen peroxide solution having a concentration of 1-70% is added to 24-70% technical grade oleum in a sufficient amount to lower the SO₂ concentration to below 10 ppm,
b) the SO₃ in the oleum is evaporated at 90-130°C in a falling film evaporator,
c) sulfuric acid and nitrosyl sulfuric acid traces are removed from the SO₃ gas stream escaping from the evaporator by means of a demister, for example in the form of a candle filter,
d) the high purity SO₃ is enriched with inert gas, and
e) the SO₃ is absorbed in sulfuric acid of a concentration of 90-99% with cooling.

2. Process according to Claim 1, **characterized in that** a portion of the high purity sulfuric acid stream obtained is recycled back into the absorption column.

3. Process according to Claim 1, **characterized in that** high purity deionized water is added to adjust the concentration of the high purity sulfuric acid to a desired concentration, the concentration adjustment being closed loop controlled by conductivity measurement.

4. Process according to Claim 1, **characterized in that** the high purity sulfuric acid obtained is filled into PTFE-lined storage vessels or containers.

5. Process according to Claims 1 to 4, **characterized in that** particles formed are removed from the sulfuric acid using a three-stage filtration.

6. Process according to Claim 5, **characterized in that** PFA or PTFE filters having a pore size of 0.1 µm to 1 µm are used.

7. Process according to Claim 1, **characterized in that** the SO₃ is absorbed cocurrently in a PTFE-lined reactor containing packing elements of PFA.

8. Process according to Claims 1 and 2, **characterized in that** the heat of reaction formed is removed in a downstream tube bundle reactor made of PFA or fluorinated polyolefins under an inert gas cushion.

9. Process according to Claim 1, **characterized in that** the high purity SO₃ is enriched with ultrapure nitrogen or highly purified air as inert gas to an inert gas concentration between 1 to 50%.

10. Process according to Claim 1, **characterized in that** a demister made of high purity PFA or fluorinated polyolefins is used.

11. Process according to Claim 1, **characterized in that** vent gases are treated with pure sulfuric acid in a scrubber.

## Revendications

1. Procédé pour la préparation d'acide sulfurique de grande pureté destiné à l'industrie des semi-conducteurs, **caractérisé**
a) en ce que l'on mélange à de l'oléum technique à 24-70 % une quantité suffisante d'une solution d'eau oxygénée à une concentration allant de 1 à 70 % pour faire passer la concentration en SO₂ en dessous de 10 ppm et
b) en ce que l'on évapore à une température de 90 - 130° le SO₃ contenu dans l'oléum dans un évaporateur à film descendant,
c) en ce que l'on effectue la séparation des traces d'acide sulfurique et d'acide nitrosylsulfurique, du courant de gaz SO₃ se dégageant de l'évaporateur, au moyen d'un dispositif dévésiculeur, par exemple sous la forme d'un filtre en forme de bougies,
d) en ce que l'on inrichit le SO₃ de grande pureté en gaz inerte et
e) en ce que l'on effectue, sous refroidissement, l'absorption du SO₃ dans l'acide sulfurique à une concentration comprise entre 90 et 99 %.

2. Procédé selon la revendication 1, **caractérisé en ce que** l'on renvoie une partie du courant d'acide sulfurique de grande pureté obtenue dans la colonne d'absorption.

3. Procédé selon la revendication 1, **caractérisé en ce que** l'on ajuste la concentration de l'acide sulfurique de grande pureté à la concentration désirée par addition d'eau désionisée très pure, l'ajustage de la concentration étant réglé par mesure de la conductivité.

4. Procédé selon la revendication 1, **caractérisé en ce que** l'acide sulfurique de grande pureté obtenu est placé dans un réservoir de stockage ou un container revêtu de PTFE.

5. Procédé selon les revendications 1 à 4, **caractérisé en ce que** l'on enlève de l'acide sulfurique les particules formées par une filtration en trois étapes.

6. Procédé selon la revendication 5, **caractérisé en ce que** l'on utilise des filtres constitués de PFA ou de PTFE ayant une dimension de pores comprise entre 0,1 µm et 1 µm.

7. Procédé selon la revendication 1, **caractérisé en ce que** l'absorption du SO₃ s'effectue à co-courant dans un réacteur revêtu de PTFE contenant des corps de remplissage constitués de PFA.

8. Procédé selon les revendications 1 et 2, **caractérisé en ce que** l'on évacue la chaleur réactionnelle formée sous un matelas de gaz inerte dans un réacteur à faisceau tubulaire en PFA ou en polyoléfines fluorées placé à la suite.

9. Procédé selon la revendication 1, **caractérisé en ce que** l'on effectue l'enrichissement du SO₃ de grande pureté en azote extra-pur ou en air hautement purifié comme gaz inerte, jusqu'à l'obtention d'une concentration en gaz inerte comprise entre 1 et 50 %.

10. Procédé selon la revendication 1, **caractérisé en ce que** l'on utilise un dispositif dévésiculeur constitué de PFA de grande pureté ou de polyoléfines fluorées.

11. Procédé selon la revendication 1, **caractérisé en ce que** l'on traite les gaz d'aération dans une tour de lavage, ce que l'on appelle un scrubber, avec de l'acide sulfurique pur.
